# FASCICULE DE BREVET EUROPEEN

(11) **EP 3 203 299 B1**
(45) Date de publication et mention de la délivrance du brevet: **14.11.2018**
(21) Numéro de dépôt: 17154187.3
(22) Date de dépôt: 01.02.2017
(51) Int. Cl.: G02B 26/08

(54) **MIROIR DEFORMABLE**
VERFORMBARER SPIEGEL
DEFORMABLE MIRROR

(30) Priorité: 03.02.2016 FR 1600184
(43) Date de publication de la demande: 09.08.2017
(73) Titulaire: Thales, 92400 Courbevoie (FR); Centre National d'Etudes Spatiales, 75001 Paris (FR)
(72) Inventeur: DEVILLIERS, Christophe, 83700 ST RAPHAEL (FR); AGUILAR, Félix, 06200 NICE (FR); HOUAIRI, Kamel, 06156 CANNES LA BOCCA CEDEX (FR); SUAU, Aurélien, 06156 CANNES LA BOCCA CEDEX (FR)
(74) Mandataire: Collet, Alain

(56) Documents cités:
- EP-A1- 2 860 563
- US-A1- 2011 019 295
- US-A1- 2014 307 243

## Description

L'invention se situe dans le domaine de l'optique active spatiale et concerne un miroir déformable, aussi connu sous le nom de miroir actif déformé par un actionneur.

Un télescope dispose d'un miroir principal, aussi appelé miroir primaire. Le miroir primaire concentre les rayons lumineux vers un miroir secondaire qui les renvoie au foyer du téléscope. Le miroir primaire ne doit pas se déformer sous l'effet de la gravité par exemple. Souvent, un miroir intermédiaire déformable est utilisé pour corriger les défauts du miroir primaire. Et le miroir intermédiaire est déformé par un ou plusieurs actionneurs.

Les télescopes modernes sont équipés d'optiques déformables dites « actives ». Le miroir d'un tel télescope est donc déformé en permanence par des actionneurs fixés directement sur l'arrière du miroir afin de toujours optimiser les performances optiques du télescope.

Pour avoir une bonne résolution, les actionneurs disposent d'une tête flottante montée sur ressorts permettant de diviser par un facteur important le déplacement de l'actionneur.

Néanmoins, la connexion entre le miroir et la tête flottante de l'actionneur pose plusieurs problèmes. Tout d'abord, on peut déplorer un défaut d'intégration important générant une déformée du miroir non corrigeable. Il s'agit de ce qu'on appelle les couples parasites. Il peut aussi se produire un mauvais alignement et guidage de la tête flottante par les ressorts, ce qui a pour conséquence d'injecter des couples parasites lorsque l'actionneur est en fonctionnement pour déformer le miroir. Enfin, lors du lancement, le lancement impose une contrainte supplémentaire nécessitant une connexion rigide entre le miroir et les actionneurs, des moments et efforts importants sont engendrés sur le miroir du fait des masses additionelles déportées portées par le miroir (notamment la masse des têtes flottantes).

Le document EP 2 860 563 divulgue un tel miroir déformable. L'invention vise à pallier tout ou partie des problèmes cités plus haut en proposant un miroir déformable ayant une membrane déformable par un actionneur comprenant en outre une plaque plane et des éléments de liaison situés entre l'actionneur et la membrane pour découpler de la membrane les couples parasites issus de l'actionneur, pour décharger les efforts et moments dynamiques arrivant sur le miroir lors des phases de lancement et également sous gravité.

A cet effet, l'invention a pour objet un miroir déformable comprenant une membrane déformable s'étendant au repos dans un premier plan et ayant une face avant réfléchissante et une face arrière opposée à la face avant, une structure porteuse, un actionneur ayant une première et une seconde extrémités, la première extrémité étant fixée sur la structure porteuse, la seconde extrémité étant apte à se déplacer par rapport à la première extrémité selon un premier axe sensiblement perpendiculaire au premier plan pour exercer sur la face arrière un effort axial selon le premier axe, de façon à déformer localement la membrane déformable, une plaque sensiblement plane dans un deuxième plan sensiblement parallèle au premier plan, positionnée entre l'actionneur et la membrane déformable, liée à la face arrière et apte à se déformer quand l'actionneur exerce l'effort axial, et la plaque est rigide dans le deuxième plan de façon à reprendre des efforts appliqués au miroir dans le deuxième plan.

Selon un mode de réalisation, le miroir comprend un élément élastique positionné entre la plaque et la membrane déformable.

Selon un autre mode de réalisation, la plaque est liée à la face arrière par l'intermédiaire d'un coupleur configuré pour transmettre uniquement un effort axial entre l'actionneur et la membrane déformable et pour permettre un déplacement libre dans le premier plan de la membrane déformable par rapport à la plaque.

Selon un autre mode de réalisation, le miroir comprend un élément élastique positionné entre la plaque et la seconde extrémité de l'actionneur.

Selon un autre mode de réalisation, le miroir comprend un élément élastique positionné entre la plaque et la structure porteuse.

Selon un autre mode de réalisation, l'actionneur comprend une tête libre en translation dans un troisième plan sensiblement parallèle au deuxième plan et libre en rotation positionnée sur la seconde extrémité de l'actionneur et la tête est reliée à la structure porteuse par au moins un élément élastique, de façon à limiter le déplacement de la seconde extrémité de l'actionneur.

Selon un autre mode de réalisation, le miroir comprend un pied d'encastrement reliant la membrane déformable à la structure porteuse, et la plaque a une extrémité fixée dans le pied d'encastrement.

Selon un autre mode de réalisation, la plaque est évidée de façon à favoriser sa déformation quand l'actionneur exerce l'effort axial.

Selon un autre mode de réalisation, le miroir comprend plusieurs actionneurs ayant chacun une première et une seconde extrémité, la première extrémité étant fixée sur la structure porteuse, la seconde extrémité étant apte à se déplacer par rapport à la première extrémité selon un premier axe sensiblement perpendiculaire au premier plan pour exercer sur la face arrière un effort axial selon le premier axe, de façon à déformer localement la membrane déformable.

L'invention concerne tout mode de réalisation résultant d'une combinaison de deux ou plusieurs des modes de réalisation précédemment cités.

L'invention sera mieux comprise et d'autres avantages apparaîtront à la lecture de la description détaillée de plusieurs modes de réalisation donnés à titre d'exemple, description illustrée par le dessin joint dans lequel :
- la figure 1 représente schématiquement un premier mode de réalisation d'un miroir déformable selon l'invention ;
- la figure 2 représente schématiquement un deuxième mode de réalisation d'un miroir déformable selon l'invention ;
- la figure 3 représente schématiquement un troisième mode de réalisation d'un miroir déformable selon l'invention ;
- la figure 4 représente schématiquement un quatrième mode de réalisation d'un miroir déformable selon l'invention ;
- la figure 5 représente schématiquement un cinquième mode de réalisation d'un miroir déformable selon l'invention ;
- la figure 6 représente schématiquement un sixième mode de réalisation d'un miroir déformable selon l'invention ;
- la figure 7 représente schématiquement un septième mode de réalisation d'un miroir déformable selon l'invention ;
- la figure 8 représente schématiquement un huitième mode de réalisation d'un miroir déformable selon l'invention ;
- la figure 9 représente schématiquement un neuvième mode de réalisation d'un miroir déformable selon l'invention ;
- la figure 10 représente schématiquement un dixième mode de réalisation d'un miroir déformable selon l'invention ;
- la figure 11 représente schématiquement un onzième mode de réalisation d'un miroir déformable selon l'invention,
- la figure 12 représente schématiquement un douzième mode de réalisation d'un miroir déformable selon l'invention comprenant plusieurs actionneurs.

Par souci de clarté, les mêmes éléments porteront les mêmes repères dans les différentes figures.

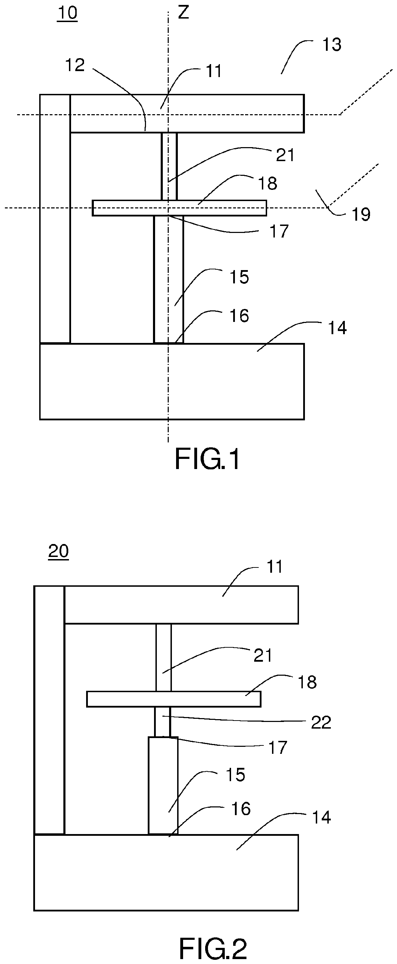

La **figure 1** représente schématiquement un premier mode de réalisation d'un miroir déformable 10 selon l'invention. Le miroir déformable 10 comprend une membrane déformable 11 s'étendant au repos dans un premier plan 13 et ayant une face avant réfléchissante et une face arrière 12, opposée à la face avant, une structure porteuse 14, un actionneur 15 ayant une première 16 et une seconde 17 extrémités, la première extrémité 16 étant fixée sur la structure porteuse 14, la seconde extrémité 17 étant apte à se déplacer par rapport à la première extrémité 16 selon un premier axe Z sensiblement perpendiculaire au premier plan 13 pour exercer sur la face arrière 12 un effort axial selon le premier axe Z, de façon à déformer localement la membrane déformable 11. Selon l'invention, le miroir déformable 10 comprend une plaque 18 sensiblement plane dans un deuxième plan 19 sensiblement parallèle au premier plan 13, positionnée entre l'actionneur 15 et la membrane déformable 11, liée à la face arrière 12 et apte à se déformer quand l'actionneur 15 exerce l'effort axial, et la plaque 18 est rigide dans le deuxième plan 19 de façon à reprendre des efforts appliqués au miroir 10 dans le deuxième plan 19.

La plaque plane 18 peut être également appelée plaque plane filtrante du fait de son action filtrante des efforts, moments et couples parasites appliqués au miroir 10. Par ailleurs, le fait que la plaque 18 est rigide dans le deuxième plan 19 de façon à reprendre les efforts appliqués au miroir 10 est à prendre à un sens large dans lequel le terme efforts inclut également les moments et couples parasites appliqués au miroir.

Le miroir déformable 10 est représenté schématiquement avec un seul actionneur 15. L'invention s'applique aussi à un miroir déformable comprenant deux, trois ou, plus généralement, une pluralité d'actionneurs. Un miroir déformable peut comprendre typiquement 24 actionneurs. Le nombre d'actionneurs d'un miroir déformable peut aussi atteindre 100. Un grand nombre d'actionneurs permet d'obtenir une grande précision de déformation de la membrane déformable.

Chaque actionneur exerce un effort axial selon l'axe Z sur la face arrière de la membrane déformable. Plus précisément, l'actionneur est configuré pour tirer sur la face arrière de la membrane déformable sensiblement perpendiculairement au plan de la membrane déformable. L'actionneur peut aussi pousser sur la face arrière de la membrane déformable sensiblement perpendiculairement au plan de la membrane déformable. Ainsi l'actionneur exerce un effort uniaxial selon l'axe Z sur la membrane déformable pour la déformer.

La plaque 18 est rigide dans son plan 19 et souple hors de son plan afin d'encaisser tous les efforts dans son plan 19. La plaque 18 est constituée d'un matériau métallique, par exemple en titane ou en acier inoxydable. La plaque 18 peut être fine, par exemple de l'ordre de 0,5 mm pour une membrane déformable de l'ordre de 3,5 mm d'épaisseur.

Avantageusement, le miroir déformable 10 peut comprendre un élément élastique 21 positionné entre la plaque 18 et la membrane déformable 11. L'élément élastique 21 peut être par exemple un ressort ou une mousse ou tout autre élément présentant une certaine élasticité. L'élément élastique 20 permet d'obtenir un rapport de réduction important entre l'actionneur 15 et la membrane déformable 11 et permet de filtrer des couples et moments issus des actionneurs.

La **figure 2** représente schématiquement un deuxième mode de réalisation d'un miroir déformable 20 selon l'invention. Le miroir déformable 20 comprend les mêmes éléments que le miroir déformable 10 présenté sur la figure 1 mais se différencie du miroir déformable 10 par le fait qu'il comprend un élément élastique 22 positionné entre la plaque 18 et la seconde extrémité 17 de l'actionneur 15. Cette configuration permet de limiter le déplacement de la seconde extrémité 17 de l'actionneur 15 et ainsi d'obtenir une précision importante de la déformation de la membrane déformable 11 lorsque l'actionneur 15 exerce un effort axial selon l'axe Z. L'élément élastique 22 peut être par exemple un ressort ou une mousse ou tout autre élément présentant une certaine élasticité. L'élément élastique 22 permet d'obtenir, en fonction de la raideur choisie de l'élément élastique 22, un rapport de réduction important entre l'actionneur 15 et la membrane déformable 11. Selon le déplacement possible de l'actionneur 15 et de la raideur choisie de l'élément 22, il est possible, lorsque l'actionneur 15 génère un effort axial sur la face arrière de la membrane déformable 11, d'obtenir une déformation contrôlée de la membrane déformable 11.

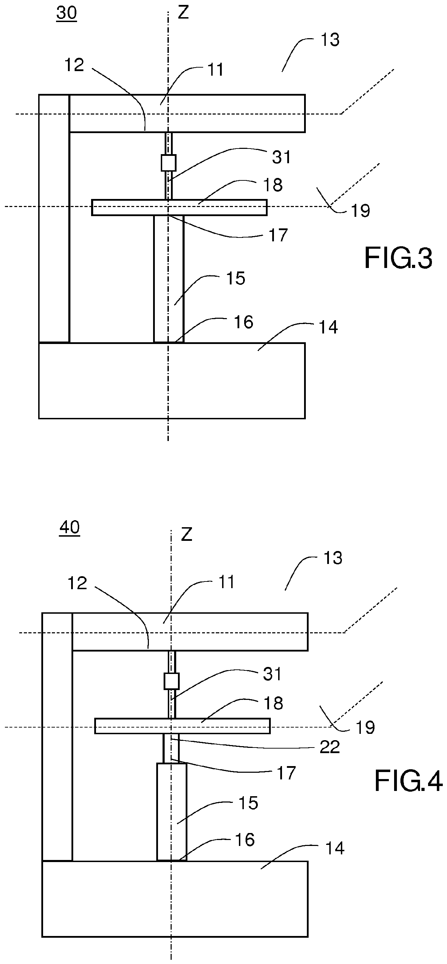

La **figure 3** représente schématiquement un troisième mode de réalisation d'un miroir déformable 30 selon l'invention. Le miroir déformable 30 comprend les mêmes éléments que le miroir déformable 10 présenté sur la figure 1 mais se différencie du miroir déformable 10 par le fait que la plaque 18 est liée à la face arrière 12 par l'intermédiaire d'un coupleur 31 configuré pour transmettre uniquement un effort axial entre l'actionneur 15 et la membrane déformable 11 et pour permettre un déplacement libre dans le premier plan de la membrane déformable 11 par rapport à la plaque 18. Le coupleur 31 peut être par exemple une pièce longitudinale métallique, aussi appelée biellette, avantageusement ayant un coefficient de dilatation très faible. Le coupleur 31 peut être constitué en titane, en acier inoxydable ou en alliage de 64% fer et de 36 % nickel. Le coupleur 31 peut présenter des strictions permettant de créer une souplesse en flexion filtrant les moments parasites, ces moments étant repris par la plaque filtrante 18.

Le miroir déformable 30 est représenté schématiquement avec un seul coupleur 31. L'invention s'applique aussi à un miroir déformable comprenant deux, trois ou, plus généralement, une pluralité de coupleurs 31 répartis uniformément ou non-uniformément entre la plaque 18 et la membrane déformable 11.

La **figure 4** représente schématiquement un quatrième mode de réalisation d'un miroir déformable 40 selon l'invention. Le miroir déformable 40 comprend les mêmes éléments que le miroir déformable 30 présenté sur la figure 3 mais se différencie du miroir déformable 30 par le fait qu'il comprend un élément élastique 22 positionné entre la plaque 18 et la seconde extrémité 17 de l'actionneur 15. Cette configuration permet de limiter le déplacement de la seconde extrémité 17 de l'actionneur 15 et ainsi d'obtenir une précision importante de la déformation de la membrane déformable 11 lorsque l'actionneur 15 exerce un effort axial selon l'axe Z.

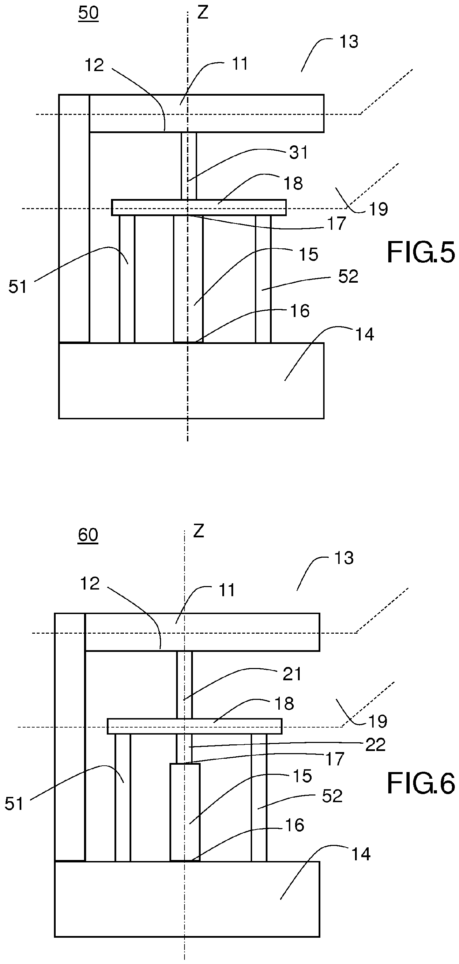

La **figure 5** représente schématiquement un cinquième mode de réalisation d'un miroir déformable 50 selon l'invention. Le miroir déformable 50 comprend les mêmes éléments que le miroir déformable 10 présenté sur la figure 1 mais se différencie du miroir déformable 10 par le fait qu'il comprend un élément élastique 51 positionné entre la plaque 18 et la structure porteuse 14. L'élément élastique 51 peut être par exemple un ressort ou une mousse ou tout autre élément présentant une certaine élasticité. L'élément élastique 51 permet de limiter le déplacement de la seconde extrémité 17 de l'actionneur 15 et ainsi d'obtenir une précision importante de la déformation de la membrane déformable 11 lorsque l'actionneur 15 exerce un effort axial selon l'axe Z.

La **figure 6** représente schématiquement un sixième mode de réalisation d'un miroir déformable 60 selon l'invention. Le miroir déformable 60 comprend les mêmes éléments que le miroir déformable 50 présenté sur la figure 5 mais se différencie du miroir déformable 50 par le fait qu'il comprend un élément élastique 22 positionné entre la plaque 18 et la seconde extrémité 17 de l'actionneur 15. Cette configuration permet de limiter le déplacement de la seconde extrémité 17 de l'actionneur 15 et ainsi d'obtenir une précision importante de la déformation de la membrane déformable 11 lorsque l'actionneur 15 exerce un effort axial selon l'axe Z.

Dans la configuration du miroir déformable 50 et du miroir déformable 60, il est possible d'avoir un deuxième élément élastique 52 positionné entre la plaque 18 et la structure porteuse 14. Par exemple, la plaque 18 peut être reliée à la structure porteuse 14 par plusieurs éléments élastiques, par exemple trois éléments élastiques autour de chaque actionneur, avantageusement positionnés à 120°.

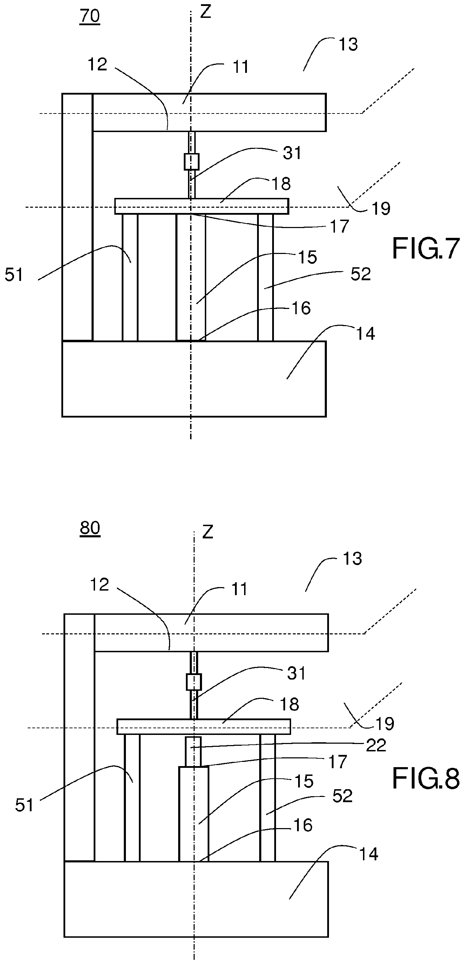

La **figure 7** représente schématiquement un septième mode de réalisation d'un miroir déformable 70 selon l'invention. Le miroir déformable 70 comprend les mêmes éléments que le miroir déformable 50 présenté sur la figure 5 mais se différencie du miroir déformable 50 par le fait que la plaque 18 est liée à la face arrière 12 par l'intermédiaire d'un coupleur 31 configuré pour transmettre uniquement un effort axial entre l'actionneur 15 et la membrane déformable 11 et pour permettre un déplacement libre dans le premier plan de la membrane déformable 11 par rapport à la plaque 18. Comme expliqué précédemment pour le miroir déformable 30 représenté sur la figure 3, le coupleur 31 peut être par exemple une pièce longitudinale métallique, aussi appelée biellette, avantageusement ayant un coefficient de dilatation très faible. Le coupleur 31 peut être constitué en titane, en acier inoxydable ou en alliage de 64% fer et de 36 % nickel. Le coupleur 31 peut présenter des strictions permettant de créer une souplesse en flexion filtrant les moments parasites.

De même que précédemment, le miroir déformable 70 est représenté schématiquement avec un seul coupleur 31. L'invention s'applique aussi à un miroir déformable comprenant deux, trois ou, plus généralement, une pluralité de coupleurs 31 répartis uniformément ou non-uniformément entre la plaque 18 et la membrane déformable 11.

La **figure 8** représente schématiquement un huitième mode de réalisation d'un miroir déformable 80 selon l'invention. Le miroir déformable 80 comprend les mêmes éléments que le miroir déformable 70 présenté sur la figure 7 mais se différencie du miroir déformable 70 par le fait qu'il comprend un élément élastique 22 positionné entre la plaque 18 et la seconde extrémité 17 de l'actionneur 15. Cette configuration permet de limiter le déplacement de la seconde extrémité 17 de l'actionneur 15 et ainsi d'obtenir une précision importante de la déformation de la membrane déformable 11 lorsque l'actionneur 15 exerce un effort axial selon l'axe Z.

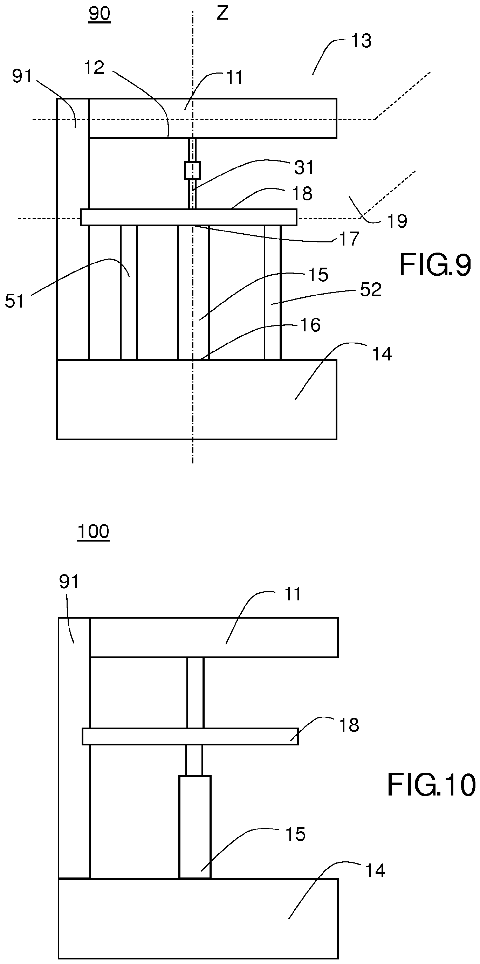

La **figure 9** représente schématiquement un neuvième mode de réalisation d'un miroir déformable 90 selon l'invention. Le miroir déformable 90 comprend les mêmes éléments que le miroir déformable 70 présenté sur la figure 7 mais se différencie du miroir déformable 70 par le fait qu'il comprend un pied d'encastrement 91 reliant la membrane déformable 11 à la structure porteuse 14, et la plaque 18 a une extrémité fixée dans le pied d'encastrement 91. Le pied d'encastrement 91 relie la membrane déformable 11 à la structure porteuse 14. Le pied d'encastrement 91 peut être central. Dans ce cas, la membrane déformable est reliée en son centre au pied d'encastrement. Par exemple, le pied d'encastrement 91 peut comprendre une bague sur laquelle est collée la membrane déformable de façon à maintenir en position la membrane déformable. Le miroir déformable selon l'invention peut aussi comprendre plusieurs pieds d'encastrement (par exemple trois pieds d'encastrement positionnés à 120°), par exemple positionnés en périphérie du miroir. Dans ce cas, la membrane déformable est reliée aux pieds d'encastrement au niveau de sa zone périphérique ou peut l'être aussi sur un diamètre intermédiaire du miroir.

Le fait que la plaque 18 ait une extrémité fixée dans le pied d'encastrement 91 permet de réduire les contraintes qui lui sont appliquées notamment lors du lancement.

La **figure 10** représente schématiquement un dixième mode de réalisation d'un miroir déformable 100 selon l'invention. Le miroir déformable 100 comprend les mêmes éléments que le miroir déformable 10 présenté sur la figure 1 mais se différencie du miroir déformable 10 par le fait que la plaque 18 a une extrémité fixée dans le pied d'encastrement 91, comme expliqué précédemment dans le mode de réalisation présenté sur la figure 9.

A noter que la variante de la plaque 18 ayant une extrémité fixée dans le pied d'encastrement 91 peut s'appliquer à tous les modes de réalisations présentés ci-dessus.

De façon plus générale, toutes les caractéristiques présentées sur chacun des modes de réalisation présentés précédemment peuvent se combiner sans sortir du cadre de l'invention.

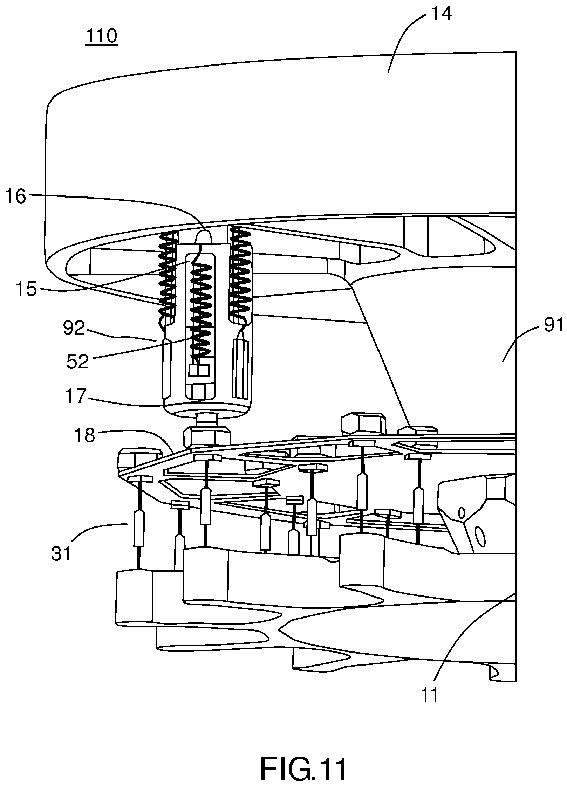

La **figure 11** représente schématiquement un onzième mode de réalisation d'un miroir déformable 110 selon l'invention. Le miroir déformable 110 comprend les mêmes éléments que le miroir déformable 90 présenté sur la figure 9 mais se différencie du miroir déformable 90 par le fait que l'actionneur 15 comprend une tête 92 libre en translation dans un troisième plan sensiblement parallèle au deuxième plan et libre en rotation positionnée sur la seconde extrémité 17 de l'actionneur 15 et la tête 92 est reliée à la structure porteuse 14 par au moins un élément élastique 52, de façon à limiter le déplacement de la seconde extrémité 17 de l'actionneur 15. La tête 92 est dite flottante du fait qu'elle est libre en rotation et en translation et est uniquement soumise à un effort uniaxial selon l'axe de l'actionneur 15. La tête 92 permet de diviser par un certain facteur le déplacement de la seconde extrémité 17 de l'actionneur 15.

Une seule tête flottante est représentée sur la figure 11 mais l'invention s'applique aussi à un miroir déformable comprenant plusieurs têtes flottantes, jusqu'à une tête flottante par actionneur.

On peut noter que le mode de réalisation avec tête flottante peut être combiné avec tous les autres modes de réalisation déjà présentés. Néanmoins, en présence d'un élément élastique entre l'actionneur 15 et la plaque 18 ou entre la plaque 18 et la structure porteuse 14, la tête flottante 92 n'est pas nécessaire puisque le déplacement de la seconde extrémité 17 de l'actionneur 15 est alors limitée par le ou les éléments élastiques.

Avantageusement, la plaque 18 peut être évidée, dans le but de l'assouplir, de façon à favoriser sa déformation quand l'actionneur 15 exerce l'effort axial. Ainsi, il est possible d'obtenir une bonne déformation de la plaque 18 sans augmenter les efforts que doit fournir chaque actionneur 15. Par ailleurs, en évidant la plaque 18, on obtient un léger gain de poids du miroir déformable.

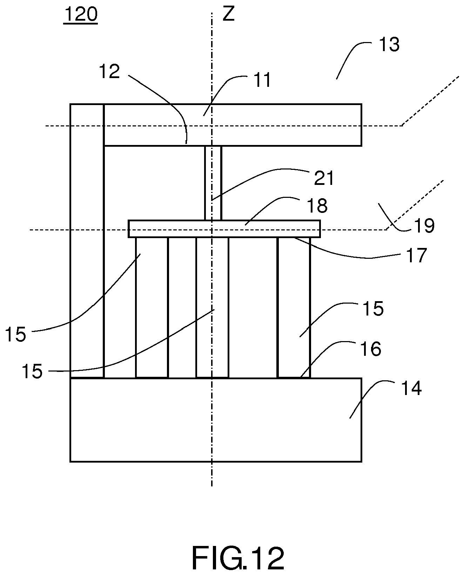

La **figure 12** représente schématiquement un douzième mode de réalisation d'un miroir déformable 120 selon l'invention comprenant plusieurs actionneurs. Le miroir déformable 120 comprend les mêmes éléments que les miroirs déformables présentés sur les figures précédentes. En effet, l'invention concerne aussi un miroir déformable comprenant plusieurs actionneurs ayant chacun une première et une seconde extrémités, la première extrémité étant fixée sur la structure porteuse, la seconde extrémité étant apte à se déplacer par rapport à la première extrémité selon un premier axe sensiblement perpendiculaire au premier plan pour exercer sur la face arrière un effort axial selon le premier axe, de façon à déformer localement la membrane déformable. Les actionneurs peuvent être répartis uniformément ou non sur la structure porteuse, et leur nombre est généralement défini en fonction des dimensions de la membrane déformable.

## Revendications

1. Miroir déformable (10, 20, 30, 40, 50, 60, 70, 80, 90, 100, 110, 120) comprenant :
- une membrane déformable (11) s'étendant au repos dans un premier plan (13) et ayant une face avant réfléchissante et une face arrière (12) opposée à la face avant,
- une structure porteuse (14),
- un actionneur (15) ayant une première (16) et une seconde (17) extrémités, la première extrémité (16) étant fixée sur la structure porteuse (14), la seconde extrémité (17) étant apte à se déplacer par rapport à la première extrémité (16) selon un premier axe (Z) sensiblement perpendiculaire au premier plan (13) pour exercer sur la face arrière (12) un effort axial selon le premier axe (Z), de façon à déformer localement la membrane déformable (11),
**caractérisé en ce qu'**il comprend une plaque (18) sensiblement plane dans un deuxième plan (19) sensiblement parallèle au premier plan (13), positionnée entre l'actionneur (15) et la membrane déformable (11), liée à la face arrière (12) et apte à se déformer quand l'actionneur (15) exerce l'effort axial, et **en ce que** la plaque (18) est rigide dans le deuxième plan (19) de façon à reprendre des efforts appliqués au miroir dans le deuxième plan (19).

2. Miroir déformable (10, 20, 50, 60, 100, 120) selon la revendication 1, **caractérisé en ce qu'**il comprend un élément élastique (21) positionné entre la plaque (18) et la membrane déformable (11).

3. Miroir déformable (30, 40, 70, 80, 90, 110) selon l'une quelconque des revendications 1 ou 2, **caractérisé en ce que** la plaque (18) est liée à la face arrière (12) par l'intermédiaire d'un coupleur (31) configuré pour transmettre uniquement un effort axial entre l'actionneur (15) et la membrane déformable (11) et pour permettre un déplacement libre dans le premier plan (13) de la membrane déformable (11) par rapport à la plaque (18).

4. Miroir déformable (20, 40, 60, 80, 100) selon l'une quelconque des revendications précédentes, **caractérisé en ce qu'**il comprend un élément élastique (22) positionné entre la plaque (18) et la seconde extrémité (17) de l'actionneur (15).

5. Miroir déformable (50, 60, 70, 80, 90) selon l'une quelconque des revendications précédentes, **caractérisé en ce qu'**il comprend un élément élastique (51) positionné entre la plaque (18) et la structure porteuse (14).

6. Miroir déformable (110) selon l'une quelconque des revendications précédentes, **caractérisé en ce que** l'actionneur (15) comprend une tête (92) libre en translation dans un troisième plan sensiblement parallèle au deuxième plan (19) et libre en rotation positionnée sur la seconde extrémité (17) de l'actionneur (15) et **en ce que** la tête (92) est reliée à la structure porteuse (14) par au moins un élément élastique (52), de façon à limiter le déplacement de la seconde extrémité (17) de l'actionneur (15).

7. Miroir déformable (90, 100, 110) selon l'une quelconque des revendications précédentes, **caractérisé en ce qu'**il comprend un pied d'encastrement (91) reliant la membrane déformable (11) à la structure porteuse (14), et **en ce que** la plaque (18) a une extrémité fixée dans le pied d'encastrement (91).

8. Miroir déformable (10, 20, 30, 40, 50, 60, 70, 80, 90, 100, 110, 120) selon l'une quelconque des revendications précédentes, **caractérisé en ce que** la plaque (18) est évidée de façon à favoriser sa déformation quand l'actionneur (15) exerce l'effort axial.

9. Miroir déformable (120) selon l'une quelconque des revendications précédentes, **caractérisé en ce qu'**il comprend plusieurs actionneurs ayant chacun une première et une seconde extrémités, la première extrémité étant fixée sur la structure porteuse, la seconde extrémité étant apte à se déplacer par rapport à la première extrémité selon un premier axe sensiblement perpendiculaire au premier plan pour exercer sur la face arrière un effort axial selon le premier axe, de façon à déformer localement la membrane déformable.

## Patentansprüche

1. Verformbarer Spiegel (10, 20, 30, 40, 50, 60, 70, 80, 90, 100, 110, 120), Folgendes beinhaltend:
- eine verformbare Membran (11), welche sich im Ruhezustand in einer ersten Ebene (13) erstreckt und welche eine reflektierende Vorderseite und eine Rückseite (12) besitzt, welche der Vorderseite gegenüberliegt,
- eine Trägerstruktur (14),
- ein Betätigungselement (15), welches ein erstes (16) und ein zweites (17) Ende besitzt, wobei das erste Ende (16) an der Trägerstruktur (14) befestigt ist, das zweite Ende (17) in der Lage ist, sich in Bezug auf das erste Ende (16) entlang einer ersten Achse (Z) zu bewegen, welche im Wesentlichen rechtwinklig zur ersten Ebene (13) ist, um auf die Rückseite (12) eine Axialkraft entlang der ersten Achse (Z) so auszuüben, dass die verformbare Membran (11) lokal verformt wird,
**dadurch gekennzeichnet, dass** er eine Platte (18) beinhaltet, welche im Wesentlichen plan in einer zweiten Ebene (19) ist, welche im Wesentlichen parallel zur ersten Ebene (13) ist, positioniert zwischen dem Betätigungselement (15) und der verformbaren Membran (11), verbunden mit der Rückseite (12) und in der Lage, sich zu verformen, wenn das Betätigungselement (15) die Axialkraft ausübt, und dadurch, dass die Platte (18) in der zweiten Ebene (19) steif ist, um so die auf den Spiegel in der zweiten Ebene (19) aufgebrachten Kräfte aufzunehmen.

2. Verformbarer Spiegel (10, 20, 50, 60, 100, 120) nach Anspruch 1, **dadurch gekennzeichnet, dass** er ein elastisches Element (21) beinhaltet, welches zwischen der Platte (18) und der verformbaren Membran (11) positioniert ist.

3. Verformbarer Spiegel (30, 40, 70, 80, 90, 110) nach einem der Ansprüche 1 oder 2, **dadurch gekennzeichnet, dass** die Platte (18) mit der Rückseite (12) über einen Koppler (31) verbunden ist, welcher konfiguriert ist, um nur eine Axialkraft zwischen dem Betätigungselement (15) und der verformbaren Membran (11) zu übertragen und um eine freie Bewegung in der ersten Ebene (13) der verformbaren Membran (11) in Bezug auf die Platte (18) zu ermöglichen.

4. Verformbarer Spiegel (20, 40, 60, 80, 100, 120) nach einem der vorhergehenden Ansprüche, **dadurch gekennzeichnet, dass** er ein elastisches Element (22) beinhaltet, welches zwischen der Platte (18) und dem zweiten Ende (17) des Betätigungselements (15) positioniert ist.

5. Verformbarer Spiegel (50, 60, 70, 80, 90) nach einem der vorhergehenden Ansprüche, **dadurch gekennzeichnet, dass** er ein elastisches Element (51) beinhaltet, welches zwischen der Platte (18) und der Trägerstruktur (14) positioniert ist.

6. Verformbarer Spiegel (110) nach einem der vorhergehenden Ansprüche, **dadurch gekennzeichnet, dass** das Betätigungselement (15) einen Kopf (92) besitzt, welcher frei verschiebbar in einer dritten Ebene ist, welche im Wesentlichen parallel zur zweiten Ebene (19) ist und frei drehend auf dem zweiten Ende (17) des Betätigungselements (15) positioniert ist, und dadurch, dass der Kopf (92) mit der Trägerstruktur (14) durch mindestens ein elastisches Element (52) verbunden ist, um so die Bewegung des zweiten Endes (17) des Betätigungselements (15) zu begrenzen.

7. Verformbarer Spiegel (90, 100, 110) nach einem der vorhergehenden Ansprüche, **dadurch gekennzeichnet, dass** er einen Einbaufuß (91) beinhaltet, welcher die verformbare Membran (11) mit der Trägerstruktur (14) verbindet, und dadurch, dass die Platte (18) ein festes Ende besitzt, welches in dem Einbaufuß (91) befestigt ist.

8. Verformbarer Spiegel (10, 20, 30, 40, 50, 60, 70, 80, 90, 100, 110, 120) nach einem der vorhergehenden Ansprüche, **dadurch gekennzeichnet, dass** die Platte (18) so ausgehöhlt ist, dass ihre Verformung begünstigt wird, wenn das Betätigungselement (15) die axiale Kraft ausübt.

9. Verformbarer Spiegel (120) nach einem der vorhergehenden Ansprüche, **dadurch gekennzeichnet, dass** er mehrere Betätigungselemente beinhaltet, welche jeweils ein erstes und ein zweites Ende besitzen, wobei das erste Ende an der Trägerstruktur befestigt ist, wobei das zweite Ende in der Lage ist, sich in Bezug auf das erste Ende entlang einer ersten Achse zu bewegen, welche im Wesentlichen rechtwinklig zur ersten Ebene ist, um auf die Rückseite eine Axialkraft auszuüben entlang der ersten Achse in der Weise, dass die verformbare Membran lokal verformt wird.

## Claims

1. Deformable mirror (10, 20, 30, 40, 50, 60, 70, 80, 90, 100, 110, 120) comprising:
- a deformable membrane (11) extending at rest in a first plane (13) and having a reflecting front face and a back face (12) opposite the front face,
- a supporting structure (14),
- an actuator (15) having a first (16) and a second (17) end, the first end (16) being fixed to the supporting structure (14), the second end (17) being able to be displaced relative to the first end (16) on a first axis (Z) substantially at right angles to the first plane (13) to exert, on the back face (12), an axial load on the first axis (Z), so as to locally deform the deformable membrane (11),
**characterized in that** it comprises a plate (18) that is substantially flat in a second plane (19) substantially parallel to the first plane (13), positioned between the actuator (15) and the deformable membrane (11), linked to the back face (12) and capable of being deformed when the actuator (15) exerts the axial load, and **in that** the plate (18) is rigid in the second plane (19) so as to take up loads applied to the mirror in the second plane (19).

2. Deformable mirror (10, 20, 50, 60, 100, 120) according to Claim 1, **characterized in that** it comprises an elastic element (21) positioned between the plate (18) and the deformable membrane (11).

3. Deformable mirror (30, 40, 70, 80, 90, 110) according to either one of Claims 1 and 2, **characterized in that** the plate (18) is linked to the back face (12) via a coupler (31) configured to transmit only an axial load between the actuator (15) and the deformable membrane (11) and to allow a free displacement in the first plane (13) of the deformable membrane (11) relative to the plate (18).

4. Deformable mirror (20, 40, 60, 80, 100) according to any one of the preceding claims, **characterized in that** it comprises an elastic element (22) positioned between the plate (18) and the second end (17) of the actuator (15).

5. Deformable mirror (50, 60, 70, 80, 90) according to any one of the preceding claims, **characterized in that** it comprises an elastic element (51) positioned between the plate (18) and the supporting structure (14).

6. Deformable mirror (110) according to any one of the preceding claims, **characterized in that** the actuator (15) comprises a head (92) that is free in translation in a third plane substantially parallel to the second plane (19) and free in rotation, positioned on the second end (17) of the actuator (15), and **in that** the head (92) is linked to the supporting structure (14) by at least one elastic element (52), so as to limit the displacement of the second end (17) of the actuator (15).

7. Deformable mirror (90, 100, 110) according to any one of the preceding claims, **characterized in that** it comprises an embedding foot (91) linking the deformable membrane (11) to the supporting structure (14), and **in that** the plate (18) has an end fixed in the embedding foot (91).

8. Deformable mirror (10, 20, 30, 40, 50, 60, 70, 80, 90, 100, 110, 120) according to any one of the preceding claims, **characterized in that** the plate (18) is hollowed so as to promote its deformation when the actuator (15) exerts the axial load.

9. Deformable mirror (120) according to any one of the preceding claims, **characterized in that** it comprises a plurality of actuators each having a first and a second end, the first end being fixed to the supporting structure, the second end being able to be displaced relative to the first end on a first axis substantially at right angles to the first plane to exert, on the back face, an axial load on the first axis, so as to locally deform the deformable membrane.
